# EUROPEAN PATENT APPLICATION

(11) **EP 4 394 649 A1**
(43) Date of publication of application: **03.07.2024**
(21) Application number: 23219373.0
(22) Date of filing: 21.12.2023
(51) Int. Cl.: G06F 40/169, G06F 40/30, G06F 40/35

(54) **EMPLOYING CHATBOTS WITH GRAPHICONS FOR SURVEY METHOD AND SYSTEM**

(30) Priority: 28.12.2022 KR 20220186778; 18.07.2023 KR 20230093017
(71) Applicant: Seoul National University R & DB Foundation, Seoul 08826 (KR)
(72) Inventor: Gahgene, GWEON, 08826 Seoul (KR); Jungwook, RHIM, 08826 Seoul (KR)
(74) Representative: Manitz Finsterwald Patent- und Rechtsanwaltspartnerschaft mbB

(57) **Abstract**

An embodiment according to the present disclosure provides employing chatbots with graphicons for survey method and system. The method includes setting the chatbot to use graphicons that imitate preset human paralinguistic element and nonverbal element, providing a question according to a preset survey to a user terminal communication-connected to the chatbot server and receiving an answer to the question employing the chatbot, and analyzing the answer and transmitting the graphicon corresponding to the answer among the graphicons to the user terminal.

## Description

### CROSS-REFERENCE TO RELATED APPLICATION

This application is based on and claims priority under 35 U.S.C. §119 to Korean Patent Application No. 10-2022-0186778, filed on Dec 28, 2022 and Korean Patent Application No. 10-2023-0093017, filed on July 18, 2023, in the Korean Intellectual Property Office, the disclosure of which is incorporated by reference herein in its entirety.

### BACKGROUND

### 1. Field

The present disclosure relates to employing chatbots with graphicons for survey method and system, and more specifically, to employing chatbots with graphicons for survey method and system, which imitates human paralinguistic elements and nonverbal elements.

### 2. Description of the Related Art

The usability of chatbots is high when using the web or applications. The chatbots are mainly used to replace CS (Customer Service) tasks such as Q&A (Questions & Answers) and FAQ (Frequently Asked Questions) that are required when users make inquiries to service providers.

According to a report by the Korea Trade-Investment Promotion Agency, the size of the domestic chatbot market is expected to grow at an average annual rate of 51% as of 2021.

Because existing chatbots are provided mainly through text, they have limitations in the use of paralinguistic or nonverbal language that is difficult to convey through text, and thus have difficulty imitating human communication perfectly. In this case, the paralinguistic or nonverbal language refers to a communication method in addition to linguistic content, including facial expressions, tone of voice, speaking speed, and intonation.

Recently, with the development of chatbot technology, the chatbot technology is also being used in the survey field, and like general chatbots, text-based surveys are conducted. Thus, information on the paralinguistic or nonverbal language was omitted, and as a result, it was difficult to conduct the survey with people. Therefore, when conducting a survey, problems arose, such as a decrease in the quality of the data collected and a decrease in satisfaction due to increased fatigue of users participating in the survey.

In order to solve these conventional problems, the paralinguistic or nonverbal language is provided using graphicons of visual elements, including emoticons, emojis, stickers, and gif-type photos that are used when people communicate online. By using graphicon, the weakness of existing survey chatbots in their inability to imitate the paralinguistic or nonverbal language is overcome, and thereby a survey chatbot that may imitate the paralinguistic or nonverbal language is created.

### SUMMARY

The present disclosure is intended to solve the problems of the prior art described above, and relates to employing chatbots with graphicons for survey method and system that imitates human paralinguistic and nonverbal elements.

However, technical problems that the present embodiment aims to solve are not limited to the technical problems described above, and other technical problems may exist.

As technical means for solving the above-described technical problem, an embodiment according to a first aspect of the present disclosure provides employing chatbots with graphicons for survey method and system. The method includes setting the chatbot to use graphicons that imitate preset human paralinguistic element and nonverbal element, providing a question according to a preset survey to a user terminal communication-connected to the chatbot server and receiving an answer to the question using the chatbot, and analyzing the answer and transmitting the graphicon corresponding to the answer among the graphicons to the user terminal.

In addition, an embodiment according to a second aspect of the present disclosure provides a survey system using a chatbot including a communication module, at least one processor, and a memory that is electrically connected to the processor and stores at least one code executed by the processor, wherein, when being executed through the processor, the memory sets the processor such that the chatbot uses graphicons that imitate preset human paralinguistic element and nonverbal element, provides a question according to a preset survey to a user terminal communication-connected to the chatbot server, receives an answer to the question using the chatbot, analyses the answer, and stores a code causing the graphicon corresponding to the answer among the graphicons to transmit to the user terminal.

The present disclosure may perform employing chatbots with graphicons for survey method and system.

Through the graphicon, it is possible to help users understand communication, provide the users with a user experience of communicating with humans by imitating and expressing the paralinguistic and nonverbal languages that are components of basic human communication that cannot be represented in existing chatbots, and provide richer context information of conversations to improve the quality of user response data collected through surveys and the user's experience.

In addition, the user experience of communicating with a human obtained through paralinguistic and nonverbal expressions gives the user the effect of conducting a survey in the same way as a face-to-face interview, thereby enabling large-scale surveys to be conducted, and expecting higher quality answers than those of the existing surveys.

### BRIEF DESCRIPTION OF THE DRAWINGS

The above and other aspects, features, and advantages of certain embodiments of the disclosure will be more apparent from the following description taken in conjunction with the accompanying drawings, in which:
FIG. 1 is a diagram for explaining employing chatbots for survey system according to an embodiment of the present disclosure;
FIG. 2 is a diagram illustrating a detailed configuration of a server illustrated in FIG. 1;
FIG. 3 is a diagram for explaining graphicons applied to the survey system employing chatbots according to an embodiment of the present disclosure;
FIG. 4 is a flowchart illustrating a survey process performed in a chatbot server according to the embodiment of FIG. 2;
FIG. 5 is a diagram illustrating a survey screen provided to a user terminal according to an embodiment of the present disclosure;
FIG. 6 is an exemplary diagram illustrating a process of performing emotion analysis according to an embodiment of the present disclosure;
FIG. 7 is a diagram illustrating a sequence of employing chatbots for survey method according to another embodiment of the present disclosure; and
FIG. 8 is a diagram illustrating detailed steps for some steps of employing chatbots for survey method illustrated in FIG. 7.

### DETAILED DESCRIPTION

Hereinafter, the present disclosure will be described in detail with reference to the attached drawings. However, the present disclosure may be implemented in various different forms and is not limited to the embodiments described herein. In addition, the attached drawings are only intended to facilitate understanding of the embodiments disclosed in this specification, and the technical idea disclosed in this specification is not limited by the attached drawings. All terms, including technical and scientific terms, used herein should be interpreted as meanings commonly understood by those skilled in the art in the technical field to which the present disclosure pertains. Terms defined in the dictionary should be interpreted as having additional meanings consistent with the related technical literature and currently disclosed content, and should not be interpreted in a very ideal or limited sense unless otherwise defined.

In order to clearly explain the present disclosure in the drawings, parts not related to the description are omitted, and the size, shape, and form of each component illustrated in the drawings may be modified in various ways. Throughout the specification, identical/similar parts are given identical/similar reference numerals.

Throughout the specification, when a part is said to be "connected (coupled, contacted, or combined)" with another part, this means not only when it is "directly connected (coupled, contacted, or combined)," but also when it is "indirectly connected (coupled, contacted, or combined)" with another member therebetween. In addition, when a part is said to "include (equip or provide)" a certain component, this does not exclude other components, unless specifically stated to the contrary, but rather further "include (equip or provide)" other components.

In this specification, 'portion' includes a unit realized by hardware, a unit realized by software, and a unit realized using both. In addition, one unit may be realized using two or more pieces of hardware, and two or more units may be realized using one piece of hardware. Meanwhile, '~ portion' is not limited to software or hardware, and '~ portion' may be configured to reside in an addressable storage medium or may be configured to reproduce one or more processors. Therefore, as an example, '~ portion' refers to components such as software components, object-oriented software components, class components, and task components, processes, functions, properties, and procedures, subroutines, segments of program code, drivers, firmware, microcode, circuits, data, databases, data structures, tables, arrays, and variables. The functions provided within the components and 'portions' may be combined into a smaller number of components and 'portions' or may be further separated into additional components and 'portions'. In addition, components and 'portions' may be implemented to regenerate one or more CPUs within a device or a secure multimedia card.

The suffixes "module" and "portion" for components used in the following description are given or used interchangeably only for the ease of preparing the specification, and do not have distinct meanings or roles in themselves. In addition, in describing the embodiments disclosed in this specification, if it is determined that detailed descriptions of related known technologies may obscure the gist of the embodiments disclosed in this specification, the detailed descriptions are omitted.

Terms representing ordinal numbers, such as first, second, etc., used in this specification are used only for the purpose of distinguishing one component from another component and do not limit the order or relationship of the components. For example, the first component of the present disclosure may be named a second component, and similarly, the second component may also be named a first component. As used herein, singular forms of expression should be construed to also include plural forms of expression, unless the contrary is clearly indicated.

The "user terminal" mentioned below may be implemented as a computer or portable terminal that may connect to a server or other terminal through a network. Here, the computer may include, for example, a laptop equipped with a web browser, a desktop, a laptop, a VR HMD (for example, HTC VIVE, Oculus Rift, GearVR, DayDream, PSVR, etc.), etc. The VR HMD includes all of model for PC (for example, HTC VIVE, Oculus Rift, FOVE, Deepon, etc.), model for mobile (for example, GearVR, DayDream, Storm Magic, Google Cardboard, etc.), model for console (PSVR), independently implemented Stand Alone models (for example, Deepon, PICO, etc.), etc. Portable terminals are, for example, wireless communication devices that ensure portability and mobility, including smart phone, tablet PC, and wearable device, as well as various devices equipped with communication modules such as Bluetooth (BLE, Bluetooth Low Energy), NFC, RFID, ultrasonic, infrared, WiFi, and LiFi. In addition, "network" refers to a connection structure that allows information exchange between nodes such as terminals and servers, and includes a local area network (LAN), a wide area network (WAN), and the Internet (WWW: World Wide Web), wired and wireless data communication network, telephone network, wired and wireless television communication network, etc. An examples of wireless data communication networks includes 3G, 4G, 5G, 3GPP (3rd Generation Partnership Project), LTE (Long Term Evolution), WIMAX (World Interoperability for Microwave Access), Wi-Fi, Bluetooth communication, infrared communication, and ultrasound communication, Visible Light Communication (VLC), LiFi, or the like but is not limited thereto.

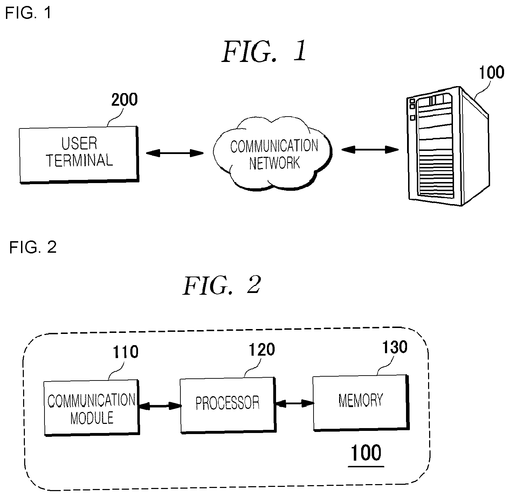

FIG. 1 is a diagram for explaining employing chatbots for survey system according to an embodiment of the present disclosure.

With reference to FIG. 1, employing chatbots for survey system includes a chatbot server 100 and a user terminal 200, and the chatbot server 100 and the user terminal 200 may be connected to communication through a communication network. The chatbot server 100 may be formed as a cloud computing server such as SaaS (Software as a Service), PaaS (Platform as a Service), or IaaS (Infrastructure as a Service). In addition, the chatbot server 100 may be built in a private cloud, public cloud, or hybrid cloud system, but the scope of the present disclosure is not limited thereto.

The chatbot server 100 sets the chatbot to use graphicons that imitates preset human paralinguistic elements and nonverbal elements. For example, the paralinguistic elements may include at least one of text and images expressing tone, intonation, stress, rhythm, and sound field used in communication as detailed elements, and the nonverbal elements may include images of gaze, facial expressions, movements, and body language used in communication as detailed elements.

The chatbot server 100 uses the chatbot to provide questions according to a preset survey to the user terminal 200 connected to communication with the chatbot server 100, and receives answers to the questions.

The chatbot server 100 analyzes the answer and transmits a graphicon corresponding to the answer among the graphicons to the user terminal 200. For example, if the question is a multiple-choice question, the answer may be one option selected from among options included in the multiple-choice question, and the chatbot server 100 may provide a pre-stored graphicon that matches the option. Alternatively, if the question is a subjective question, the answer may be a sentence including one or more words, and the chatbot server 100 may perform emotion analysis on the sentence and provide a graphicon according to a performance result of the emotional analysis.

The user terminal 200 may be communication-connected to the chatbot server 100 through a communication network. The user terminal 200 may refer to a laptop equipped with a web browser, a desktop, a laptop, a wireless communication device that guarantees portability and mobility, or any type of handheld wireless communication device such as a smartphone, or tablet PC.

FIG. 2 is a diagram illustrating a detailed configuration of the chatbot server illustrated in FIG. 1.

With reference to FIG. 2, the chatbot server 100 may include a communication module 110, a processor 120, and a memory 130.

The communication module 110 may include a device including hardware and software necessary to transmit and receive signals such as control signals or data signals through wired or wireless connections with other network devices.

The communication module 110 may receive an answer to the survey question from the user terminal 200. In addition, the communication module 110 may transmit graphicons corresponding to the survey question and answer to the user terminal 200.

The processor 120 may include various types of devices that control and process data. The processor 120 may refer to a data processing device built into hardware that has a physically structured circuit to perform functions represented by codes or instructions included in a program.

In one example, the processor 120 may be implemented in the form of a microprocessor, a central processing unit (CPU), a processor core, a multiprocessor, an ASIC (application-specific integrated circuit), or an FPGA (field programmable gate array), etc., but the scope of the present disclosure is not limited thereto.

The processor 120 performs an operation according to the code stored in the memory 130.

The memory 130 may store at least one of information and data input to the communication module 110, information and data required for functions performed by the processor 120, and data generated according to execution of the processor 120.

Memory 130 should be interpreted as a general term for a non-volatile storage device that continuously maintains stored information even when power is not supplied and a volatile storage device that requires power to maintain stored information. The memory 130 may include magnetic storage media or flash storage media in addition to the volatile storage device that requires power to maintain stored information, but the scope of the present disclosure is not limited thereto.

The memory 130 is electrically connected to the processor 120 and stores at least one code executed by the processor 120. The memory 130 stores a code that, when being executed through the processor 120, causes the processor 120 to perform the following functions and procedures.

The memory 130 stores a code causing the chatbot to be set to use graphicons that imitate preset human paralinguistic elements and nonverbal elements.

For example, in the chatbot server 100, graphicons including emoticons, emojis, stickers, and photos/GIFs are configured in a table form according to visual, auditory, and tactile methods, and the graphicons may be classified and stored in visual, auditory, and tactile methods. The chatbot server 100 may emotion-analyzes a response of the user terminal 200 which will be described later, and the stored graphicon may be provided as a response from the chatbot in response to the emotion analysis result.

The memory 130 includes at least one of text and images expressing tone, intonation, stress, rhythm, and sound field used in communication as detailed elements of paralinguistic elements, and stores a code causing to include images of gaze, facial expressions, movements and body language used in communication as detailed elements of nonverbal elements.

For example, the graphicon may include images that correspond to paralinguistic or nonverbal elements, emoji GIFs, and image and video.

The memory 130 may store a code that provides a question according to a preset survey to the user terminal 200 communication-connected to the chatbot server 100 using the chatbot and cause the user terminal 200 to receive an answer to the question.

The memory 130 may store a code causing the answer to be analyzed and the graphicon corresponding to the answer to be transmitted to the user terminal 200.

In the memory 130, if the question is the multiple-choice question, the answer may be one option selected from among options included in the multiple-choice question, and the chatbot server 100 may store a code causing the chatbot server 100 to provide a pre-stored graphicon that matches the option.

In the memory 130, if the question is a subjective question, the answer may be a sentence including one or more words, and the chatbot server 100 may perform emotion analysis on the sentence and store a code causing a graphicon to be provided according to the performance result of the emotion analysis.

As the performance result of the emotion analysis, the memory 130 may acquire a valence value for whether the polarity of the answer is positive or negative and an arousal value for whether the intensity of the answer is high or low, and may store a code causing the graphicon corresponding to the answer to be provided using the valence value and the arousal value.

The memory 130 may store a code such that if the valence value is positive and the arousal value is high, the graphicon corresponding to preset high positive is provided, if the valence value is positive and the arousal value is low, the graphicon corresponding to preset low positive is provided, if the valence value is negative and the arousal value is high, the graphicon corresponding to preset high negative is provided, and if the valence value is negative and the arousal value is low, the graphicon corresponding to low negative is provided.

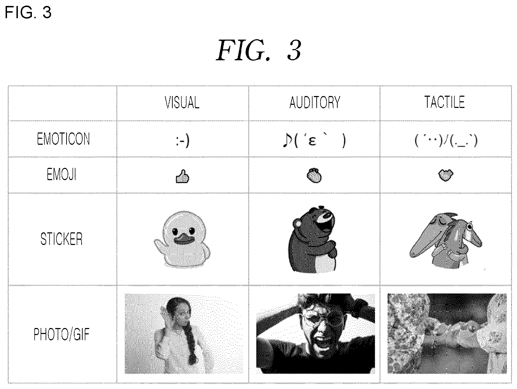

FIG. 3 is a diagram for explaining graphicons applied to a survey system employing chatbots according to an embodiment of the present disclosure.

With reference to FIG. 3, graphicons may be divided into emoticons, emojis, stickers, and photos/GIFs depending on their form, and may be divided into visual, auditory, and tactile methods according to their expression method.

As illustrated in FIG. 3, the visual emoticons may be represented in the form of a smiling face, the visual emojis may be represented in the form of the meaning best, the visual stickers may be represented in the form of figures including people or animals, and the visual photos/GIFs may be represented in the form of photo or a moving photo (GIF) that includes the meaning of wanting to express.

For example, the visual emoticon may be represented in a form that may be represented by entering the keys on the keyboard, such as "smiling face: :-)", or a puzzled face: (^_^;". In addition, the visual image may be represented in , which means the best. ", the V sign for victory, , etc. In addition, the visual sticker may be represented in a preset character making a gesture with meaning. In addition, the visual photo/GIF may be represented in a photograph taken a real person in relation to a specific meaning.

Then, as illustrated in FIG. 3, the auditory emoticon may be represented in the form of a whistle, the auditory emoji may be represented in the form of clapping hands, the auditory sticker may be represented in the form of a person or animal laughing out loud, and the auditory photo/GIF may be represented in the form of an actual model expressing sound.

For example, the auditory emoticon may be represented as "whistle: 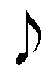 ('ε'), anger: (# ' 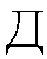 ')". In addition, the auditory emoji may be represented as "applause: 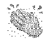 ". In addition, the auditory sticker may be represented as a preset character laughing, crying, or getting angry. In addition, the auditory photo/GIF may be represented by photographing a real human model laughing, crying, screaming, or getting angry.

Next, as illustrated in FIG. 3, the tactile emoticon may be represented in the form of stroking, the tactile emoji may be represented in the form of clapping, the tactile sticker may be represented in the form of including a person or animal in the form of comforting, the tactile photo/GIF may be represented as a photo of different people holding hands.

For example, the tactile emoticon may be represented as "stroking: ('••)/(._.')". In addition, the tactile emoji may be represented as "shaking hands: 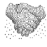 ". In addition, the tactile sticker may be represented as characters comforting or hugging. In addition, the tactile photo/GIF may be represented by photographing an actual human model holding hands.

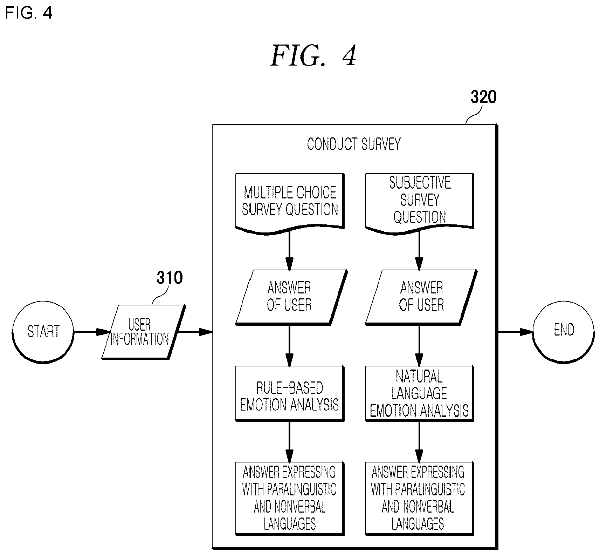

FIG. 4 is a flowchart illustrating a survey process performed by the chatbot server 100 according to an embodiment of FIG. 2.

With reference to FIG. 4, the chatbot server 100 may perform a survey in the following order: collecting user information, providing multiple-choice or subjective survey questions, receiving user answers, analyzing rule-based or natural language processing emotion, and answering nonverbal paralinguistic expression. At this time, the user information may include the user's residential area, age, gender, occupation, etc., and the standards for survey results may be set through the collection of user information. For example, surveys such as "preferred singers by age group," "brands preferred by men (or women) in their 20s", and "salary survey by occupation" may be conducted.

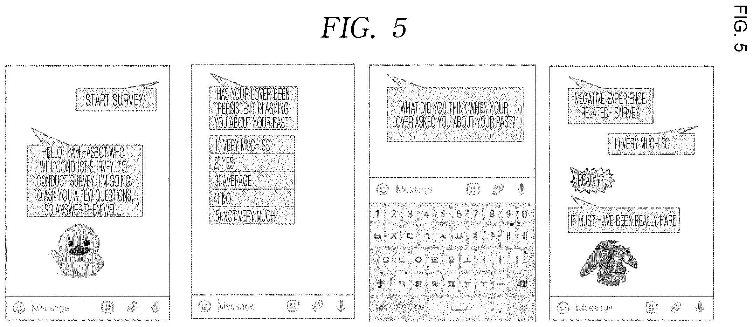

FIG. 5 is a diagram illustrating a survey screen provided to the user terminal 200 according to an embodiment of the present disclosure.

With reference to FIG. 5, the survey screen provided on the user terminal 200 starts the survey with a phrase "Start survey" and phrases "Hello! I am HASbot who will conduct the survey. To conduct the survey, I'm going to ask you a few questions, so answer them well." may be provided with the visual sticker. Next, the question is provided as follows: "Has your lover been persistent in asking you about your past?" and the answer options of "1) very much so, 2) yes, 3) average, 4) no, and 5) not very much" may be provided.

Then, the user terminal 200 may activate the keyboard to input an answer. At this time, the answering may be performed by entering a number corresponding to the option or a phrase corresponding to the number. The chatbot server 100 may emotion-analyze the received answer and provide a response corresponding to the result of the emotion analysis, which may be like "Really?" in FIG. 5. In addition, with the response, a sentence that shares emotion, "It must have been really hard," may be provided along with the tactile sticker.

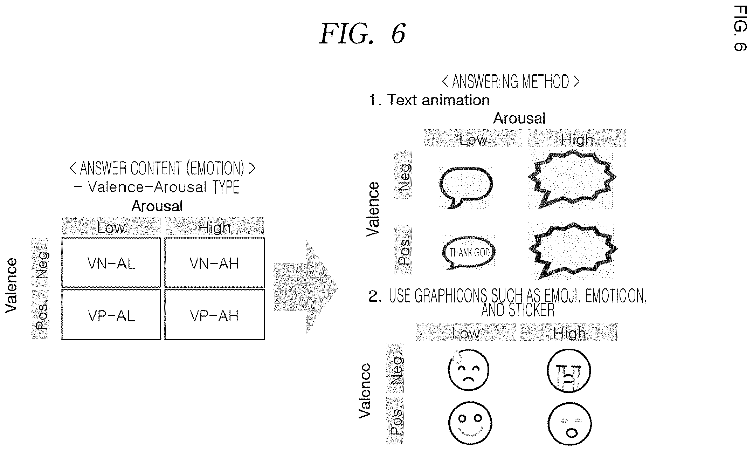

In the case of the option provided above, the nature of the answer is determined depending on whether the question is positive or negative. Therefore, if the answer "very much so" is provided to the positive question, the answer may be positive based on emotion analysis, and if the answer "not very much" is provided, the answer may be negative based on emotion analysis. The response of the chatbot server 100 following this emotion analysis will be described later with reference to FIG. 6.

FIG. 6 is an exemplary diagram illustrating a process of performing emotion analysis according to an embodiment of the present disclosure.

With reference to FIG. 6, the answer of the user terminal 200 to the survey question may be subjected to emotion analysis in a valence-arousal type. The valence value is a value that classifies the direction of emotional activation as positive or negative, and the arousal value is the intensity of emotional activation and indicates a value that classifies whether the intensity is high or low.

For example, if the emotion polarity is negative and the intensity is low, it may be represented as VN-AL (Valence Negative-Arousal Low), and if the emotion polarity is negative and the intensity is high, it may be represented as VN-AH (Valence Negative-Arousal High). In addition, if the emotion polarity is positive and the intensity is low, it may be represented as VP-AL (Valence Positive-Arousal Low), and if the emotion polarity is positive and the intensity is high, it may be represented as VP-AH (Valence Positive-Arousal High).

In this way, the graphicon provided when answering corresponding to the value generated according to the result of the emotion analysis may also be classified for each emotion analysis result.

For example, if the emotion analysis result value is a value located at both extremes such as VN-AL or VP-AH, text may be used in a red speech bubble or graphicons in the form of embarrassment and surprise may be provided. Alternatively, if the emotion analysis result value is a value distributed in the middle, such as VN-AH or VP-AL, text may be used in a blue speech bubble or graphicons in the form of empathizing or smiling may be provided. However, a graphicon may not be provided for neutral emotion (moderate).

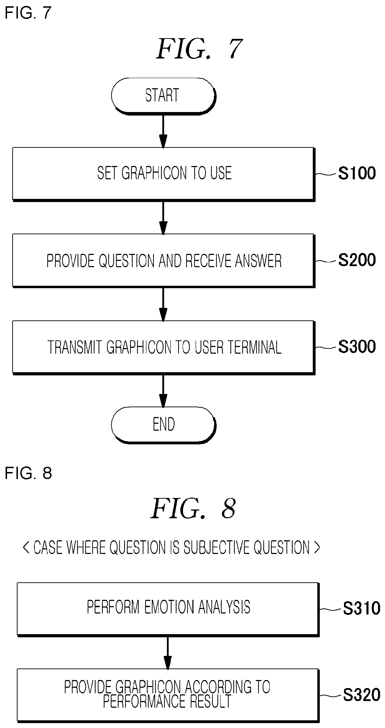

FIG. 7 is a diagram illustrating a sequence of employing chatbots for survey method according to another embodiment of the present disclosure.

FIG. 8 is a diagram illustrating detailed steps for some steps of employing chatbots for survey method illustrated in FIG. 7.

Employing chatbots for survey method, which will be described below, may be performed by the survey system and server emplyoing the chatbot previously described with reference to FIGS. 1 to 6. Accordingly, the contents of the embodiments of the present disclosure previously described with reference to FIGS. 1 to 6 may be equally applied to the embodiments to be described below, and contents that overlap with the above description will be omitted below. The steps described below do not necessarily have to be performed in order, the order of the steps may be set in various ways, and the steps may be performed almost simultaneously.

With reference to FIG. 7, employing chatbots for survey method includes a step of setting the graphicon to use (S100), a step of providing a question and receiving an answer (S200), and a step of transmitting the graphicon to the user terminal 200 (S300).

The step of setting the graphicon to use (S100) is a step of setting the chatbot to use the graphicon that imitates preset human paralinguistic elements and nonverbal elements.

The step of receiving an answer (S200) is a step of providing a question according to a preset survey to the user terminal 200 communication-connected to the chatbot server 100 and receiving an answer to the question using the chatbot.

The step of transmitting the graphicon to the user terminal 200 (S300) is a step of analyzing the answer and transmitting the graphicon corresponding to the answer to the user terminal 200.

With reference to FIG. 8, the step of receiving the answer (S200) and the step of transmitting the graphicon to the user terminal 200 (S300) may include detailed steps depending on whether the question is the multiple choice or subjective question.

If the question is the multiple-choice question, the answer is one option selected from among the options included in the multiple-choice question, and a graphicon previously saved by matching the option may be provided. At this time, rule-based emotion analysis may be performed to select a pre-stored graphicon that matches the option.

If the question is the subjective question, the answer is a sentence including one or more words, and then a step of performing emotion analysis (S310) and a step of providing a graphicon according to a performance result (S320) may be provided as illustrated in FIG. 8.

The emotion analysis performing step (S310) is a step of performing emotion analysis on the sentence, and the graphicon providing step (S320) according to the performance results is a step of providing a graphicon according to emotion analysis performing results. At this time, in the emotion analysis, natural language processing-based emotion analysis may be performed.

One embodiment of the present disclosure may also be implemented in the form of a recording medium including instructions executable by a computer, such as program modules executed by a computer. Computer-readable media may be any available media that may be accessed by a computer and includes both volatile and non-volatile media, removable and non-removable media. In addition, computer-readable media may include all computer storage media. Computer storage media includes both volatile and non-volatile, removable and non-removable media implemented in any method or technology for storage of information such as computer-readable instructions, data structures, program modules, or other data.

Although the method and system of the present disclosure have been described with respect to specific embodiments, some or all of their components or operations may be implemented using a computer system having a general-purpose hardware architecture.

Those skilled in the art to which the present disclosure pertains will be able to understand, based on the above description, that the present disclosure may be easily modified into another specific form without changing its technical idea or essential features. Therefore, the embodiments described above should be understood in all respects as illustrative and not restrictive. The scope of the present disclosure is indicated by the claims described later, and all changes or modified forms derived from the meaning and scope of the claims and their equivalent concepts should be construed as being included in the scope of the present disclosure. The scope of the present application is indicated by the claims described below rather than the detailed description above, and all changes or modified forms derived from the meaning and scope of the claims and their equivalent concepts should be construed as being included in the scope of the present application.

### Explanation of symbols

100: chatbot server, 110: communication module, 120: Processor, 130: memory, 200: user terminal

## Claims

1. A survey method using a chatbot performed by a chatbot server, the survey method comprising:
setting the chatbot to use graphicons that imitate preset human paralinguistic element and nonverbal element;
providing a question according to a preset survey to a user terminal communication-connected to the chatbot server and receiving an answer to the question using the chatbot; and
analyzing the answer and transmitting the graphicon corresponding to the answer among the graphicons to the user terminal.

2. The survey method using a chatbot of claim 1, wherein the paralinguistic element includes at least one of text and image expressing tone, intonation, stress, rhythm, and sound field used in communication as detailed elements, and
the nonverbal element includes images of gaze, facial expression, movement and body language used in communication as detailed elements.

3. The survey method using a chatbot of claim 1, wherein,
when the question is a multiple-choice question in the providing of the question, the answer is one option selected from among options included in the multiple-choice question, and
in the analyzing of the answer, a graphicon previously saved by matching the option is provided.

4. The survey method using a chatbot of claim 1, wherein,
when the question is a subjective question in the providing of the question, the answer is a sentence including one or more words, and
the analyzing of the answer includes performing emotion analysis for the sentence, and providing a graphicon according to a performance result of the emotion analysis.

5. The survey method using a chatbot of claim 4, wherein,
in the providing of a graphicon, as the performance result of the emotion analysis according to the performing of emotion analysis, a valence value for whether a polarity of the answer is positive or negative and an arousal value for whether an intensity of the answer is high or low are acquired, and a graphicon corresponding to the answer is provided using the valence value and the arousal value.

6. The survey method using a chatbot of claim 5, wherein
when the valence value is positive and the arousal value is high, the graphicon corresponding to preset high positive is provided,
when the valence value is positive and the arousal value is low, the graphicon corresponding to preset low positive is provided,
when the valence value is negative and the arousal value is high, the graphicon corresponding to preset high negative is provided, and
when the valence value is negative and the arousal value is low, the graphicon corresponding to preset low negative is provided.

7. A survey system using a chatbot, comprising:
a communication module;
at least one processor; and
a memory that is electrically connected to the processor and stores at least one code executed by the processor,
wherein when being executed through the processor, the memory sets the processor such that the chatbot uses graphicons that imitate preset human paralinguistic element and nonverbal element, provides a question according to a preset survey to a user terminal communication-connected to the chatbot server, receives an answer to the question using the chatbot, analyses the answer, and stores a code causing the graphicon corresponding to the answer among the graphicons to transmit to the user terminal.

8. The survey system using a chatbot of claim 7, wherein
the paralinguistic element includes at least one of text and image expressing tone, intonation, stress, rhythm, and sound field used in communication as detailed elements, and
the nonverbal element includes images of gaze, facial expression, movement and body language used in communication as detailed elements.

9. The survey system using a chatbot of claim 7, wherein
when the question is a multiple-choice question, the answer is one option selected from among options included in the multiple-choice question, and
when being executed through the processor, the memory sets the processor to further store a code causing a graphicon previously saved by matching the option to be provide.

10. The survey system using a chatbot of claim 7, wherein
when the question is a subjective question, the answer is a sentence including one or more words, and
when being executed through the processor, the memory sets the processor to perform emotion analysis for the sentence, and further store a code causing a graphicon to be provided according to the performance result of the emotion analysis.

11. The survey system using a chatbot of claim 10, wherein
when being executed through the processor, the memory sets the processor to further store a code causing the graphicon to be provided corresponding to the answer using a valence value for whether the polarity of the answer is positive or negative, and an arousal value for whether the intensity of the answer is high or low, as the performance result of the emotion analysis.

12. The survey system using a chatbot of claim 11, wherein
when the valence value is positive and the arousal value is high, the graphicon corresponding to preset high positive is provided,
when the valence value is positive and the arousal value is low, the graphicon corresponding to preset low positive is provided,
when the valence value is negative and the arousal value is high, the graphicon corresponding to preset high negative is provided, and
when the valence value is negative and the arousal value is low, the graphicon corresponding to preset low negative is provided.
